Europäisches Patentamt

European Patent Office

Office européen des brevets

(11) Veröffentlichungsnummer: **0 214 577**
**A2**

# (12) EUROPÄISCHE PATENTANMELDUNG

(21) Anmeldenummer: 86112026.9

(22) Anmeldetag: 30.08.86

(51) Int. Cl.⁴: **C 02 F 5/02**

(30) Priorität: 09.09.85 DE 3532031

(43) Veröffentlichungstag der Anmeldung:
18.03.87 Patentblatt 87/12

(84) Benannte Vertragsstaaten:
AT BE CH DE FR GB IT LI LU NL SE

(71) Anmelder: Eppler, Dieter
Gartenstrasse 9
D-7295 Dornstetten(DE)

(71) Anmelder: Eppler, Alwin
Gartenstrasse 9
D-7295 Dornstetten(DE)

(72) Erfinder: Eppler, Dieter
Gartenstrasse 9
D-7295 Dornstetten(DE)

(72) Erfinder: Eppler, Alwin
Gartenstrasse 9
D-7295 Dornstetten(DE)

(74) Vertreter: Patentanwälte Kohler - Schwindling - Späth
Hohentwielstrasse 41
D-7000 Stuttgart 1(DE)

(54) **Verfahren zum Reduzieren von Carbonathärte von Wasser.**

(57) Die Carbonathärte von insbesondere für die Trinkwasserversorgung bestimmtem Wasser kann dadurch reduziert werden, daß dem Wasser Calciumhydroxid und Soda oder Natronlauge zugeführt wird. Hierdurch wird eine Erhöhung des pH-Wertes erzielt, durch welche das Löslichkeitsprodukt der Härtebildner vermindert wird, mit der Folge, daß die Härtebildner ausfallen. Dieser Effekt wird nach der Erfindung dadurch gesteigert, daß vor dem Zusatz des Fällmittels der Gehalt des Wassers an darin gelöstem $CO_2$ reduziert wird, wodurch eine pH-Werterhöhung des Wassers erzielt wird, mit der Folge, daß erhebliche Mengen des sonst benötigten Fällmittels eingespart werden.

./...

Fig. 1

Anmelder:

Dieter Eppler
Alwin Eppler
Gartenstrasse 9
7295 Dornstetten

Stuttgart, den 29.8.1986
P 4717 EP

Vertreter:

Kohler-Schwindling-Späth
Patentanwälte
Hohentwielstrasse 41
7000 Stuttgart 1

## Verfahren zum Reduzieren der Carbonathärte von Wasser

Die Erfindung betrifft ein Verfahren zum Reduzieren der
Carbonathärte von insbesondere für die Trinkwasserversorgung
bestimmtem Wasser, bei dem die Härtebildner durch Zusatz
eines Fällmittels in Form von Calciumhydroxid und Soda oder
von Natronlauge zum Wasser in Form von Calciumcarbonat
ausgefällt wird, das dann durch Filtrieren abgetrennt wird.

Dieses Verfahren wird seit langem zur Wasseraufbereitung benutzt. Dabei entsteht durch chemische Umsetzung unlösliches Calciumcarbonat, das vom Wasser abtrennbar ist. Der Nachteil dieses Verfahrens besteht darin, daß es nur bei hohen Temperaturen wirksam ist, so daß es sich nur zur Aufbereitung kleinerer Wassermengen, beispielsweise für die Kesselwassererzeugung, eignet.

Häufig ist erwünscht, daß bei hartem Wasser die Carbonathärte, d.h. die vorübergehende Härte, die beim Kochen und Erhitzen des Wassers ausscheidet, beseitigt wird. Hierfür wird besonders das Schnell-Entcarbonisierungs-Verfahren bei den Wasserwerken eingesetzt, da hierbei das ausfallende Calciumcarbonat in Form von festen Körnern, Korngröße etwa 2 - 4 mm, anfällt. Bei dem Verfahren wird ein Ausfällen der Carbonathärtebildner erzielt durch die Zugabe von Calciumhydroxid.

Aus einem Aufsatz von A. Graveland in "$H_2O$" Nr. 6 (1973) Seite 382 ff, ist weiter bekannt, daß auch zur Trinkwasseraufbereitung bei relativ tiefen Temperaturen durch die Zugabe von Natronlauge ein Ausfällen der Carbonathärtebildner erzielt werden kann, ohne daß dabei eine chemische Umsetzung stattfindet.

Durch die Zugabe der genannten basischen Stoffe wird der pH-Wert des Wassers erhöht und dadurch überschreitet das Ionenprodukt das Löslichkeitsprodukt für die Härtebildner und wird die Calciumhärte vermindert durch das Ausfallen von Calciumcarbonat. Um das Wasser bei der Enthärtung auf die für das Trinkwasser gewünschte Härte zu bringen, ist ein entsprechendes Anheben des pH-Wertes auf den Wert erforderlich, um soviel Carbonathärtebildner auszufällen als wie dies zum Erreichen der gewünschten Härte erforderlich ist. Obwohl auf diese Weise eine Reduzierung der Härte des Wassers auf brauchbare Werte auch bei den in der Trinkwasseraufbereitung üblichen Wassertemperaturen möglich ist, verursacht der Einsatz von Calciumhydroxid und Natronlauge erhebliche Kosten. Weiterhin ist von Nachteil, daß bei der Schnell-Entcarbonisierung der Prozeß in der Regel nicht voll effektiv verläuft und das Wasser am Auslauf mit Calciumhydroxid noch belastet ist. Dies erfordert eine notwendige Abtrennung des zugesetzten Kalkes in einer nachgeschalteten Quarzsand-Schnellfilteranlage und weiter nach der Ausspülung aus dem Filter, die weitere Aufarbeitung in aufwendigen Kalkschlammbeeten und Schlammpressen. Erst diesen ersten Filtern weiter nachgeschaltete Filter vermögen in der Regel die endgültige Wasserreinigung vorzunehmen.

Bei der Schnell-Entcarbonisierung u.a. nach dem Verfahren Graveland, bei der die gewünschte pH-Wertanhebung durch entsprechende Natronlaugenzudosierung erfolgt, handelt es sich um ein preiswertes Verfahren, jedoch sind diesem Verfahren Grenzen gesetzt, d.h. eine Enthärtung ist nur dann möglich, wenn mit dem Verfahren der gemäß Richtlinie begrenzte Natriumspiegel im Wasser nicht überschritten wird, da zu dem vorhandenen Natriumspiegel des zu enthärtenden Wassers noch die Natriumspiegelerhöhung durch den Einsatz von Natronlauge sich addiert und dies je nach gewünschter Enthärtung teils sehr hoch.

4

Der Erfindung liegt die Aufgabe zugrunde, den Bedarf an Calciumhydroxid und Soda oder an Natronlauge mit den bekannten Verfahren zu vermindern.

Diese Aufgabe wird nach der Erfindung dadurch gelöst, daß vor der Zugabe des Fällmittels das zu enthärtende Wasser in einer Vakuumanlage entgast wird.

Die Entgasung hat insbesondere eine Ausgasung von $CO_2$ zur Folge, die zu einer Erhöhung des pH-Wertes des Wassers führt, wodurch eine entsprechend verminderte Menge der basischen Stoffe oder pH-Erhöhungsmittel benötigt wird, um den für die Enthärtung angestrebten pH-Wert zu erhalten. Es kann so die Menge an einzusetzendem Calciumhydroxid, Soda sowie auch an Natronlauge reduziert werden. Hierdurch werden nicht nur erhebliche Kosten für die einzusetzenden basischen Stoffe eingespart, sondern es wird entweder auch der Aufwand zum Abtrennen des zugesetzten Kalkes wie auch die Natriumspiegelerhöhung des Wassers vermindert oder findet eine solche gar nicht statt.

Da bei der Vakuumentgasung auch der im Wasser gelöste Sauerstoff reduziert wird, jedoch ein sauerstoffarmes Wasser für die Trinkwasserversorgung nicht zugelassen ist, ist es erforderlich, dem Wasser nach der Enthärtung wieder Sauerstoff zuzuführen. Dazu ist im allgemeinen kein großer Aufwand erforderlich, da die Erhöhung des Sauerstoffgehaltes durch Belüftung des Wassers in einer Begasungskammer oder durch Führen des Wassers über eine einfache Kaskade erfolgen kann. Weiter kann die Sauerstoffanreicherung bei einer nachgeschalteten Ozonung des Wassers erfolgen, da dabei ohne Mehrkosten die die Ozonungsanlage zum Zuführen der benötigten Luftmenge ausgelegt werden kann.

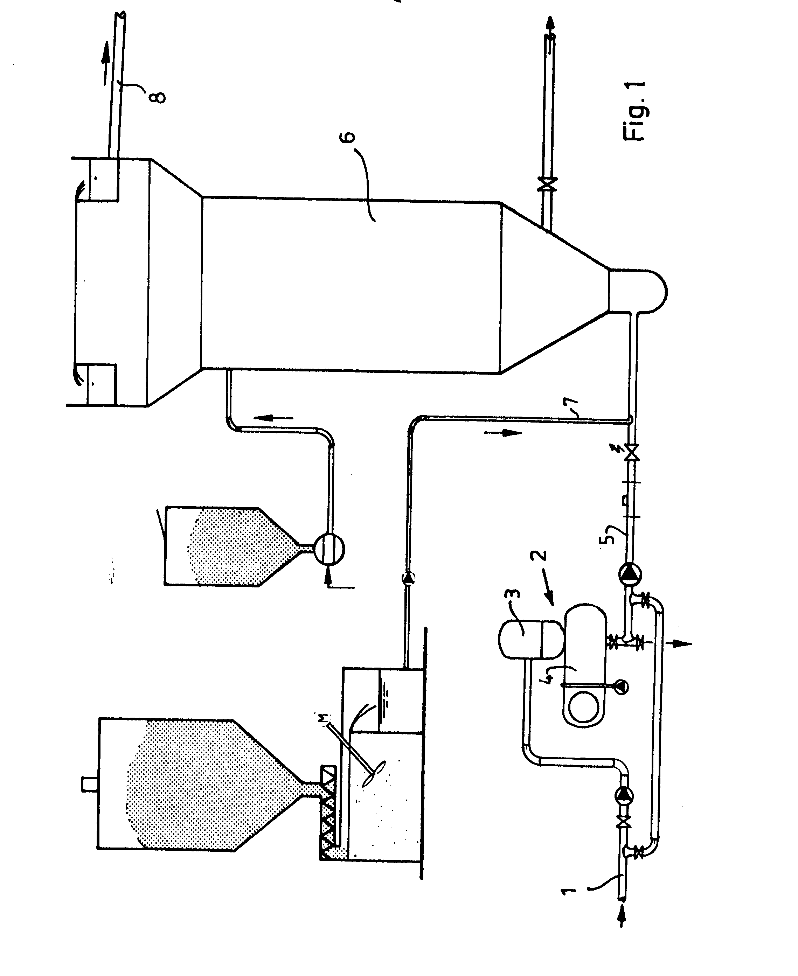

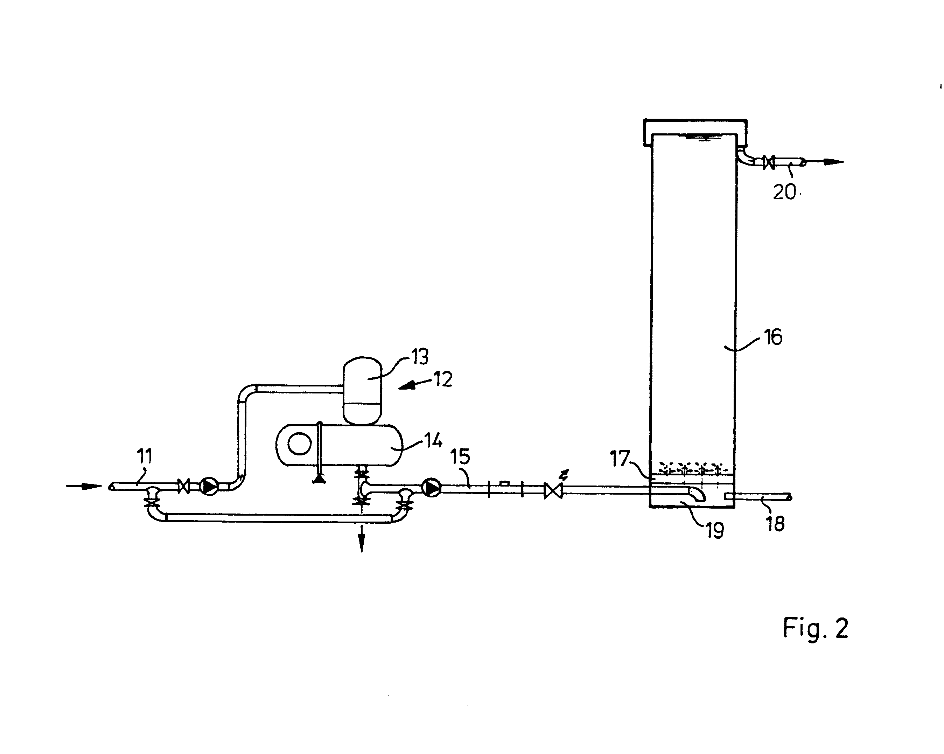

Die Erfindung wird im folgenden anhand der in der Zeichnung dargestellten Anlage zur Durchführung des erfindungsgemäßen Verfahrens näher beschrieben und erläutert. Aus der Beschreibung und der Zeichnung zu entnehmende Merkmale können bei Ausführungsformen des erfindungsgemäßen Verfahrens einzeln für sich oder zu mehreren in beliebiger Kombination Anwendung finden. Es zeigen die Fig. 1 und 2 jeweils eine Ausführungsform zur Durchführung des erfindungsgemäßen Verfahrens.

Bei der in Fig. 1 dargestellten Anlage wird das zu enthärtende Wasser über eine Leitung 1 einer zweistufigen Vakuum-Entgasungsanlage 2 zugeführt. Das Wasser wird in die erste Stufe 3 hineinverdüst und in der zweiten Stufe 4 über darin enthaltene Einbauten verrieselt. In beiden Stufen herrscht Unterdruck, wodurch eine fast vollständige Entgasung des Wassers erzielt wird. Dadurch sinkt der Sauerstoffgehalt von dem etwa 10 mg/l betragenden Sättigungswert auf 0,2 - 0,3 mg/l ab. Mit der Reduzierung des gelösten Sauerstoffes im Wasser ergibt sich gleichzeitig eine Ausgasung von $CO_2$, wodurch der pH-Wert erhöht wird.

Vom Ausgang der Entgasungsanlage 2 führt eine Leitung 5 zu einem Reaktor 6, in dem das Wasser von unten eingeführt wird. In dem Reaktor 6 befindet sich eine Füllung aus feinem Quarzsand, der beim Durchströmen fluidisiert. Dem Reaktor 6 wird unten das zu enthärtende Wasser und über eine Leitung 7
Kalkmilch zugeführt. Es ist nur noch eine solche Restmenge
an Kalkmilch zuzuführen, wie benötigt wird, um den für die
angestrebte Enthärtung erforderlichen pH-Wert zu erreichen.
Beispielsweise ist nur eine Kalkmilchmenge erforderlich, die
den pH-Wert 7,8, den Wasser nach der Entgasung aufweisen
kann, auf den für die betreffende Enthärtung gewünschten
pH-Wert von beispielsweise 8,2 bis 8,3 zu bringen. Dann
überschreitet das Ionenprodukt das Löslichkeitsprodukt für
die im Wasser enthaltenen Härtebildner, und es wird die
Calciumhärte durch das Ausfällen von Calciumcarbonat erniedrigt, das sich an den feinen Körnchen der Sandfüllung des
Reaktors 6 anlagert. Dabei dienen die feinen Sandkörnchen im
wesentlichen als Kristallisationskerne für die ausfallenden
Härtebildner. Das den Reaktor 6 über die oben angebrachte
Leitung 8 verlassende Wasser hat die gewünschte Härte und
wird einer nachgeschalteten Belüftungsanlage, nur einer
Filteranlage und, wo erforderlich, noch einer Entkeimungsanlage zugeführt, bevor es über einen Behälter an den Verbraucher abgegeben wird.

Auch die in Fig. 2 dargestellte Anlage weist eine Entgasungsanlage 12 mit zwei Stufen 13, 14 auf, der das Wasser
über eine Leitung 11 zugeführt wird. Eine Leitung 15 führt
auch hier zu einer Enthärtungsstufe mit einem Reaktor 16.
Bei diesem Verfahren werden das Wasser und über eine Leitung
18 Natronlauge einer unter einem Düsen aufweisenden Verteilerboden 17 angeordneten Kammer 19 des Reaktors 16 zugeführt. Bei diesem Verfahren erfolgt die Enthärtung im Reaktor nach der Zugabe der Natronlauge in kürzester Zeit. Auch hier wird die Calciumhärte vermindert durch das Ausfällen von Calciumcarbonat, das sich an die in dem Reaktor 16 befindlichen feinen Kristallisationskerne (bestehend aus feinem Sand, feinem Granat, feinen Stahlteilchen o. dgl.) anlagert. Das dem Reaktor 16 über die oben angebrachte Leitung 20 abfliessende Wasser mit der gewünschten Härte ist einer nachgeschalteten Belüftungsstufe, Filteranlage zuzuführen und anschließend ist das Wasser, wo erforderlich, zu desinfizieren, z.B. mit $Cl_2$, $ClO_2$, $NaClO$, einer Langsamfilteranlage oder einer UV-Anlage.

Es versteht sich, daß die Erfindung nicht auf die dargestellten Ausführungsbeispiele beschränkt ist, sondern Abweichungen davon möglich sind, ohne den Rahmen der Erfindung zu verlassen. Insbesondere kommt es nicht auf die spezielle Art der angewendeten Eliminierung von $CO_2$ mit der daraus resultierenden pH-Werterhöhung an. So können statt der zweistufigen Entgasungsanlage auch ein- oder mehrstufige Entgasungsanlagen Anwendung finden. Auch kann die Entgasungsanlage jeder beliebigen Entkarbonisierungsanlage vorgeschaltet werden, wo zur pH-Werterhöhung Kalkmilch, Soda oder Natronlauge zudosiert wird.

Patentansprüche

1. Verfahren zum Reduzieren der Carbonathärte von insbesondere für die Trinkwasserversorgung bestimmtem
Wasser, bei dem die Härtebildner durch Zugabe eines
Fällmittels in Form von Calciumhydroxid und Soda oder
von Natronlauge zum Wasser in Form von Calciumcarbonat
ausgefällt wird, das dann durch Filtrieren abgetrennt
wird, dadurch gekennzeichnet, daß vor der Zugabe des
Fällmittels das zu enthärtende Wasser in einer Vakuumanlage entgast wird.

2. Verfahren nach Anspruch 1,
dadurch gekennzeichnet, daß das Wasser nach der Enthärtung belüftet wird.

3. Verfahren nach Anspruch 1 oder 2, dadurch gekennzeichnet, daß die Sauerstoffanreicherung des Wassers nach
dem Enthärten in einer kombinierten Ozon-Belüftungsstufe erfolgt.

Fig. 1

1/2

0214577

2/2

Fig. 2